# EUROPEAN PATENT SPECIFICATION

(11) **EP 3 074 212 B1**
(45) Date of publication and mention of the grant of the patent: **03.07.2019**
(21) Application number: 14828290.8
(22) Date of filing: 25.11.2014
(51) Int. Cl.: B29C 73/22, B29D 30/06, B29C 73/20, B60C 19/12

(54) **SELF-SEALING TYRE FOR VEHICLE WHEELS AND STRIPLIKE MULTILAYER COMPOSITE**
SELBSTDICHTENDER REIFEN FÜR FAHRZEUGRÄDER UND STREIFEENFÖRMIGES MEHRSCHICHTIGES VERBUNDBAUTEIL
PNEU AUTO-OBTURANT POUR ROUES DE VÉHICULES ET ÉLÉMENT COMPOSITE MULTICOUCHE EN FORME DE BANDE

(30) Priority: 29.11.2013 IT MI20132002
(43) Date of publication of application: 05.10.2016
(73) Proprietor: Pirelli Tyre S.p.A., 20126 Milano (IT)
(72) Inventor: GIANNINI, Luca, I-20126 Milano (MI) (IT)
(74) Representative: Fraire, Cristina
(86) International application number: PCT/IB2014/066329
(87) International publication number: WO 2015/079384

(56) References cited:
- EP-A1- 2 267 073
- EP-A1- 2 366 533
- EP-A1- 2 508 342
- WO-A1-2008/013183
- US-A- 4 919 183
- US-A1- 2004 103 967

## Description

The present invention relates to a self-sealing tyre for vehicle wheels.

The self-sealing tyres for vehicle wheels are able to delay or prevent the loss of air and the consequent deflation due to a perforation caused by a sharp-pointed object, such as a nail.

### STATE OF THE ART

A self-sealing tyre comprises at least one layer of polymer sealing material which can adhere to the sharp-pointed object that perforates the tyre. The polymer sealing material is obtained in a manner so as to be moved inside the hole when the sharp-pointed object is expelled or removed, in such a manner sealing the hole itself and preventing the outflow of air from the tyre. The sealing material inside the finished tyre (moulded and vulcanised), while having a certain elasticity, is deformable and sticky.

In the process of manufacturing a self-sealing tyre, the sealing material can be deposited on the radially more internal wall of the already-vulcanised tyre, as described for example in US4418093, or it can be applied during the assembly of the green tyre and vulcanised together with the other components, such as for example in WO2011064698 on behalf of the Applicant.

In the latter case, however, due to the sticky nature and poor rigidity of the sealing material, there are handling and transport difficulties.

In order to overcome these drawbacks, protection and support films have been introduced, on which the sealing material is deposited in a uniform layer. Such films, when they are arranged as a radially more internal layer in the green tyre, facilitate the manufacturing of the tyre, preventing any undesired contact of the material with itself, with the operator, with the handling and assembly apparatuses and with the other components of the tyre. In addition, the films also perform an important function of support for the sealing material which, for its nature, is not very rigid, allowing the transport and handling thereof on the plants. Therefore, said films are also defined self-supporting films.

The self-supporting protective film can be temporary and be removed after vulcanisation, as described for example in US2009/0084482, or permanent since it can remain in the final structure of the tyre, contributing to certain extent to the sealing of the holes, as occurs for example in WO2011064698 on behalf of the Applicant.

The protective films used in the field for such purpose have various nature and thickness.

US2009/0084482 describes a removable protective film made of nylon or nylon and rubber mixtures. The film is generally removed after vulcanisation and hence is no longer present in the finished tyre.

The document EP1435301 describes a self-sealing tyre obtained by arranging an elastomeric composition comprising poly-isobutylene and peroxides at an internal surface of a non-vulcanised tyre. In one embodiment, a protective film made of thermoplastic resin, mainly composed of nylon 11, is arranged on one radially internal side of the sealing layer. The thickness of the film is 0.1 mm. The elastomeric composition is heated during the vulcanisation of the tyre, determining a reaction of decomposition of the polyisobutylene and the obtainment of a sealing elastomeric layer.

The document US2012/0180923 relates to self-sealing tyres in which the layer of sealing material is protected by a removable thermoplastic film constituted by a block polymer, comprising hard blocks of polyamides and soft blocks of polyethers or copolymers of polyethers/polyesters (Pebax®). The protective film prevents the sealing layer from sticking to the drum, during assembly, and subsequently to the vulcanisation membrane.

The document US2012/234449 describes a self-sealing tyre in which the permanent protective film has a base of chlorinated thermoplastic polymer (PVC, PVDC) and plasticising agents with high molecular weight.

EP2366533 discloses a pneumatic tyre with a built-in sealant assembly comprising a polyurethane based sealant material, wherein the built-in sealant assembly is positioned between the carcass and the inner layer

US4919183 discloses a rubber tyre with self-sealing features, wherein the sealing composite is enveloped between the liner and an innermost rubber coverstrip.

The document WO2011064698 describes self-sealing tyres which allow a selective sealing of the holes with diameter lower than a predetermined value, obtained due to a particular sealing assembly. Said assembly comprises a permanent protective film made of polyamide or polyester - arranged at least in the crown zone thereof in a manner so as to be radially more internal in the tyre - and a layer of sealing material, arranged directly on the protective film in a manner so as to be in a radially more external position, in the tyre, with respect to the protective film.

This sealing assembly has optimal performances, both in the initial sealing phase at the time of the perforation and when the sharp-pointed object is expelled, due to the cooperation between the thin protective film and the sealing material. The particular sealing assembly allows the sealing of the perforations in conditions of maximum safety, i.e. the selective sealing only of the holes which, being smaller than a predetermined size, prevents damaging the structure of the tyre.

### SUMMARY OF THE INVENTION

The self-sealing tyres provided with sealing assembly comprising a protective film made of polyamide or polyester, according to WO2011064698, are obtaining considerable commercial success since they optimally perform the function of selective sealing, ensuring safe driving for the user.

During production, the Applicant has however observed several critical issues due to the very nature of the protective film.

In some cases, an instability of the green tyre has been observed, due to the tendency of the stretched protective film to return to the original size, with partial separation of the sealing material and/or possible opening of the joint of the semi-finished product, in particular when the tyre is not vulcanised shortly after its assembly. Such situation involves an undesired increase of the production waste and requires arranging the vulcanisation shortly after the shaping of the green tyre. In order to prevent the opening of the joint of the semi-finished product, it was deemed necessary to reinforce it with the affixing of more than one fixing system, with the complication, slowing and increase of costs of the process since the vulcanisation must still take place without delay. The Applicant has also observed that the protective films with polyamide or polyester base make it more difficult to recycle the semi-finished product comprising the sealing compound, since in the process of compounding the same such films, which are not previously removable from the semi-finished product itself, form macroscopic fragments that pollute the compound and are hard to remove (e.g. they quickly obstruct possible filters). The Applicant therefore undertook further studies aimed not only to overcome the abovementioned production drawbacks of these self-sealing tyres but also to improve the safety of use thereof to an even greater extent.

Based on the conducted tests, the Applicant in fact observed that the repair of the perforations of the current self-sealing tyres in general, and of the sealing assembly described in WO2011064698 in particular, is very effective, such that it is very difficult to perceive a puncture.

The Applicant, in light of increased attention to the subject of safety, has assumed that it would be advantageous to be able to establish, quickly via visual inspection of the self-sealing tyre once dismounted from the rim, if sealed perforations are present and decide, based on the number, diameter and position of the self-sealed holes present, if it is advisable to proceed with a final repair or, in case of substantial damage of the structure, with the tyre replacement.

For example, the integrity of the self-sealing tyres of cars could be verified at each seasonal tyre change.

The Applicant has however observed that the self-sealing tyres comprising a permanent protective film with base of polyamide, polyester, PEBAX® or chlorinated polymers described in the abovementioned documents, does not allow easily verifying, due to simple visual inspection of the tyre surfaces, if and how many self-repaid perforations are actually present in the structure. Indeed the sealed perforations are generally nearly invisible to the naked eye, when inspecting both the external surface, where the pattern of the tread masks the holes, and the internal surface, where the protective films in use, especially with polyamide base, hide the holes from sight.

The Applicant has set the problem of allowing the detection of the perforations in self-sealing tyres, at the same time maintaining or, better yet, increasing the performances of the sealing assembly.

The self-sealing tyre that one wishes to obtain, in addition to highlighting the presence of possible repaired perforations, must offer a sealing capacity that is at least comparable if not improved with respect to the existing systems. In addition, in manufacturing the green tyre, the sealing assembly must be sufficiently self-supporting to allow a facilitated unrolling from the reel and an easy transport of the strip, it must be joinable in a simple and stable manner, it must be sufficiently deformable so to not be torn during the step of expansion on the drum, and for such purpose it must not elastically return with a force such to cause instability of the green tyre, with separation of the sealing material from the protective film or from the liner, and finally it must also have a thermal strength such to not be damaged during vulcanisation and moulding.

It is desirable that such self-sealing tyre would also allow a facilitated recycling of the semi-finished products.

Notwithstanding the innumerable constraints set by the encountered problems and the absence of teaching in the state of the art, the Applicant has found that it is possible to obtain self-sealing tyres, with sealing assemblies comprising permanent self-supporting films, which allow easily identifying the possible self-repaired perforations caused by the puncturing by sharp-pointed objects. These assemblies unexpectedly show an improved sealing capacity, which translates into the possibility to limit the quantities and thicknesses of the sealing materials used in the tyre given the same sealing performances, with considerable savings.

In addition, the new self-sealing tyres allow overcoming the production problems presented by the preceding systems comprising self-supporting films, in particular with polyamide base, such as the instability of the semi-finished green product, the weakness of the joint, the separation of sealing material and the difficult recycling of the semi-finished product, with considerable improvements at the process level. The present self-sealing tyre comprises a sealing assembly comprising a layer of sealing material in association with a self-supporting elastomeric film.

The elastomeric film exhibits good structural characteristics of support for the sealing material, with surprising resistance to the typical temperatures of vulcanisation, and of viscoelasticity, which allow the assembly to be suitably deformed during shaping, without later elastically returning with a force such to cause the separation of the joint of the semi-finished product and/or of the associated sealing material (disassembly of the green tyre).

More specifically, according to a first aspect, the present invention relates to a self-sealing tyre for vehicle wheels comprising:
at least one carcass ply, a tread band applied in radially external position with respect to said carcass ply in a crown region, at least one liner applied in radially internal position with respect to said carcass ply, a sealing assembly applied in radially internal position with respect to the liner and axially extended at least at a part of the crown portion;
wherein said sealing assembly comprises a self-supporting elastomeric film comprising at least 50% by weight with respect to the weight of the film itself of a thermoplastic elastomeric polyurethane (TPU), and a layer of sealing material associated with and supported by said self-supporting elastomeric film;
wherein the self-supporting elastomeric film is radially internal with respect to the layer of sealing material and said layer of sealing material is arranged substantially in contact with the liner.

Said assembly is arranged in radially more internal position of the tyre in order to cover the entire circumferential extension thereof, for an axial (or transverse) extension of at least 60% of the crown portion of the tyre.

Preferably the sealing assembly is symmetrically extended from both sides of the equatorial plane of the tyre.

Preferably such assembly is axially extended at least for the entire crown portion of the tyre.

Alternatively, the sealing assembly is extended beyond the crown portion, preferably into the edge and sidewall zone, until the bead structures are reached.

By "crown portion" of a tyre it is intended the portion of the tyre structure corresponding to the region where the tread band is present. By way of example, the extension of the axial length of the crown portion can be identified by the distance that lies between two segments perpendicular to the tread band starting from the edges of the tread band itself.

The tensile and thickness characteristics of the self-supporting elastomeric film, along with the viscoelastic and stickiness characteristics of the sealing material and its thickness are arranged in a manner such that the assembly reacts to the outflow of the perforating element with an effective sealing action, in relation to the size of the tyre and to its use destination.

In addition, the self-supporting elastomeric film allows, after vulcanisation, for the easy visual detection of possible perforations, even with the naked eye.

In accordance with a second aspect, the present invention relates to a strip-like multilayer composite comprising a sealing assembly and
a removable protective film, wherein said sealing assembly comprises a self-supporting elastomeric film comprising at least 50% by weight with respect to the weight of the film itself of a thermoplastic elastomeric polyurethane, and a layer of sealing material having a first and a second main surface opposite each other, said layer of sealing material being associated with and supported by said self-supporting elastomeric film, at the level of the first surface, and
wherein said removable protective film is arranged in contact with the second surface of said sealing material.

The present invention, in at least one of the aforesaid aspects, can have one or more of the preferred characteristics that are described hereinbelow.

The self-supporting elastomeric film of the sealing assembly, according to the invention, comprises at least 50% by weight of at least one thermoplastic elastomeric polyurethane, preferably at least 70%, 80%, 90%, 95% by weight, more preferably it essentially consists of at least one thermoplastic elastomeric polyurethane or of mixtures of two or more thermoplastic elastomeric polyurethanes.

With the term thermoplastic elastomeric polyurethane, it is intended both the polyether elastomeric polyurethanes and the polyester elastomeric polyurethanes. Generally, by polyurethanes, it is intended the polymerisation products of at least one polyalcohol (polyol) having two or more hydroxylic groups per molecule with at least one isocyanate having two or more isocyanate groups per molecule (polyisocyanate). Depending on the nature of the polyol, the polyurethanes are further divided into two main groups: polyethers and polyesters.

The isocyanates used in the preparation of the present elastomeric polyurethanes can have aliphatic nature, preferably selected from among diisocyanates such as hexamethylene diisocyanate, isophorone diisocyanate, or dicyclohexyl-4,4' diisocyanate, or aromatic nature, preferably selected from among diisocyanates such as naphthalene diisocyanate, para-phenyl diisocyanate, toluene diisocyanate (TDI) or methylene diphenyl diisocyanate (MDI), more preferably methylene diphenyl diisocyanate.

Preferred thermoplastic elastomeric polyurethanes are those obtained through the polymerisation of aromatic isocyanates, more preferably through the polymerisation of aromatic diisocyanates selected from among naphthalene diisocyanate, para-phenyl diisocyanate, toluene diisocyanate (TDI) and methylene diphenyl diisocyanate (MDI).

Short-chain diols, such as 1,4-butanediol, can be used as "chain extenders" of the rigid phase.

Preferred polyether polyurethanes are those obtained through the polymerisation of isocyanates, preferably aromatic isocyanates, with polyols mainly derived from the polymerisation of the tetrahydrofuran (poly-THF), from the polymerisation of propylene oxide or from the polymerisation of ethylene oxide, or from mixtures of propylene oxide and ethylene oxide.

Preferred polyester polyurethanes are those obtained through the polymerisation of isocyanates, preferably of aromatic isocyanates, with polyols preferably derived from the polymerisation of aliphatic dicarboxylic acids, such as adipic acid, with glycols, preferably ethylene glycols, or from the polymerisation of caprolactone. Elastomeric polyurethanes suitable as main, preferably single, components of the elastomeric film according to the present invention are commonly sold with the name of Argotec, Epurex (Bayer series Platilon ®U), Desmopan, Texin, Pearlthane, Estane, Pellethane, Elastollan, Adilithe or Eladur.

Particularly preferred are the thermoplastic elastomeric polyurethanes sold with the name of Argotec 19205 (polyether), Argotec 19103 (polyether), Epurex U073 (polyether), Epurex 4201AU (polyether) and Epurex 4100D (polyester).

The Applicant has surprisingly found that the elastomeric polyurethanes composing the present elastomeric film are not negatively affected by the vulcanisation conditions, do not compromise the sealing performances nor do they ruin the vulcanising membrane, even if they have softening temperatures which, for example, for the Epurex (Platilon®U) films vary from 145 to 175°C (Koefler bench knife method), i.e. temperatures generally well below those advised in the state of the art.

For such purpose, in the patent application US2012/0180923 at paragraph 0042, it is indicated that the materials suitable as components of the films must have an operative temperature greater than 170°C, preferably between 180°C and 260°C. Indeed, they must have softening temperatures sufficiently high to resist the heating conditions employed in the vulcanisation and moulding step, conditions which generally provide for temperatures up to 200°C, preferably between 165 and 180°C. Softening temperatures of the film material corresponding to or lower than the above temperatures could lead to the partial melting of such material, with consequent alterations of the sealing assembly and of its functionality, and the contamination and damage of the vulcanising membrane.

Starting from these assumptions, the man skilled in the art would be led to not use the present thermoplastic elastomeric polyurethanes, given that they are generally characterised by decidedly low softening temperatures, apparently little compatible with the normal vulcanisation and moulding conditions.

Surprisingly, the present self-supporting elastomeric films, with thermoplastic elastomeric polyurethane base as previously defined, are not negatively affected by the rather strong heating conditions applied in the production process. Preferably, the elastomeric polyurethanes constituting the self-supporting elastomeric film of the present sealing assembly are further characterised by a hardness (Shore A according to the ASTM D-2240 standard at 23°C) greater than 70, preferably greater than 80, more preferably greater than 85.

Preferably the elastomeric polyurethanes constituting the self-supporting elastomeric film of the present sealing assembly are further characterised by a load for an elongation of 100% (Ca1) lower than 15 MPa, preferably between 4 and 10 MPa.

The self-supporting elastomeric film of the present sealing assembly is further characterised by one or more of the following parameters:
1) Elongation at break greater than 150%, more preferably greater than 200%, still more preferably equal to or greater than 250%, evaluated according to the ASTM D882 standard on 12.57 mm width test deformed at the speed of 500 mm/min at 23°C.
2) Mechanical test obtained on a cut specimen with 20 mm width and 200 mm length, with nominal thickness comprised between 10 and 100 µm, preloaded to 0.4 N and pulled at 500 mm/min up to 35% of deformation and then maintained in the deformed state for 5 minutes:
   i) Force for a 10% elongation per linear centimetre of width preferably greater than 0.4 N/cm, more preferably greater than 0.6 N/cm, still more preferably comprised between 1 and 4 N/cm.
   ii) Residual force per linear centimetre of width of the film after about 5 minutes from the attainment of the deformation of 35% preferably lower than 3.0 N/cm, more preferably lower than 2.5 N/cm, still more preferably lower than 2.0 N/cm.

According to the experiences of the Applicant, after the shaping the thermoplastic film remains in a deformed state set by the new geometry. The reaction of the film to this set deformation is of viscoelastic type: i.e. a force is produced that is opposed to the deformation and that, after an initial decrease, remains substantially constant over time.

The Applicant has found that, for the elastomeric polyurethane film, there is a threshold value below which the residual elastic tension no longer operates in the sense of deforming the green tyre or causing the separation of the radially internal layers. It is surprising and unexpected that with a limited decrease of the residual force of the film - that is verified when passing from the Nylon 6 of the prior art, characterised by a residual force of about 4.0 N/cm (per cm of width of the sample) after about 5 minutes from the deformation of 35%, to the TPU according to the invention, having in the same test a residual force for example up to 3.0 N/cm - there is a corresponding considerable increase of the stability of the green tyre.

The Applicant has in fact verified that with the elastomeric film TPU-based of the present invention, a stability of the green tyre has been attained that is more prolonged over time with respect to the stability of the polyamide-based film. Advantageously, this allows greater flexibility in the green tyre management times between the shaping and the vulcanisation and/or a reduced need for difficult and complex fastening of the joint of the film.

Preferably, the self-supporting elastomeric film has a residual elastic tension, per centimetre of width lower than 30 N/cm, preferably less than 2.5 N/cm, more preferably less than 2.0 N/cm, measured by pulling a specimen cut longitudinally from the film itself, with 20 mm width and 200 mm length at 23°C, after having been preloaded to 0.4 N, at the speed of 500 mm/min, up to a predetermined set elongation, on the order of 20% - 50%, and then maintaining the deformed state for 5 minutes.

Preferably, said self-supporting elastomeric film before the shaping has a thickness comprised between about 10 µm and about 100 µm, preferably between 20 and 80 µm, more preferably between 25 and 70 µm, still more preferably between 25 and 50 µm.

The self-supporting films made of thermoplastic elastomeric polyurethane according to the present invention generally have thickness greater than those of polyamide of the prior art. Even though it was originally thought that this greater thickness would have prevented the cooperation of the film in the sealing action, it was instead encountered that it gives rise to surprisingly improved sealing performances.

During the building of the carcass of the tyre, the sealing assembly is first applied on the building drum according to an annular form obtained by means of a junction obtained at the ends of the sealing assembly. The subsequent toroidal shaping of the carcass structure and the sealing assembly situated radially internal with respect thereto involves a radial dilatation both of the layer of sealing material and of the self-supporting elastomeric film. The abovementioned size and material characteristics relative to the self-supporting elastomeric film are such to allow the elastoplastic deformation without breakage of the film or junction, during the shaping of the tyre. The sealing assembly must therefore be able to accompany such shaping in extension and form.

The abovementioned characteristics of the film are such to maintain the integrity thereof not only with regard to the expansion (shaping) of the tyre but also during the heating (vulcanisation and moulding): the present self-supporting film, even if the softening temperatures of the polyurethanes are lower than those of the other materials employed in the prior art for analogous films, surprisingly is not damaged and does not contaminate the vulcanisation chamber (bladder).

The abovementioned characteristics of the film are such to allow it to support its own weight and that of the sealing layer arranged thereon, without being excessively deformed both during the transport and in handling the sealing assembly, for example towards the building drum on which it must be applied. The layer of sealing material in fact tends to be deformed under its weight if it is not supported by some support.

For such purpose, the Applicant has observed that in some plant types, comprising machines operating at different speeds, in particular comprising unwinding apparatuses - which unroll the composite reel, remove and re-wind the protective film - and the cutting devices, where the sealing assembly is cut to size, it is advantageous in the unwinding of the strip-like composite to create a festoon (buffer) in order to damp the moving speed variations of the sealing assembly.

In such case, it is particularly important that the self-supporting elastomeric film has a sufficiently high modulus so as to avoid undergoing deformations and stretching greater than 1%, which would overly alter the size, actually producing a semi-finished product that is no longer suitable for application on the drum and on the joint. With regard to production, length tolerances of the semi-finished products are acceptable that are generally on the order of about ± 2.5 mm, equal to about ± 0.15%.

In addition, if the film was not suitably stable with regard to size, after having been significantly stretched and cut, it would contract, bringing the sealing material in contact with the conveyor devices of the sealing assembly, dirtying them and damaging the material itself.

Preferably, said layer of sealing material of the sealing assembly before the shaping has a thickness lower than about 7 mm, preferably lower than 6 mm, more preferably lower than 5 mm.

Preferably, said layer of sealing material before the shaping has a thickness greater than about 2 mm, preferably greater than 2.5 mm, more preferably between 3 and 4.5 mm.

Due to the greater efficiency in sealing, with respect to the sealing assembly with polyamide film described in WO2011064698, in the present sealing assembly it is possible to advantageously reduce the thickness of sealing material while maintaining the same sealing efficiency.

For the purpose of the present invention, the composition of the sealing material is not particularly limiting: the compositions described in the document WO2009143895 or in the document WO2013093608 on behalf of the Applicant can be used.

By way of example, the sealing material can comprise
(a) at least one unsaturated styrene thermoplastic elastomer;
(b) possibly at least one diene elastomer;
(c) at least one cross-linking agent;
(d) at least one bonding resin.

The composition and thickness of the layer of sealing material are selected, preferably in the scope of the abovementioned characteristics, in relation to the type of tyre to be produced, in a manner so as to provide optimal viscoelastic and stickiness characteristics for each use condition of the tyre itself. The Applicant has in fact taken care to apply the invention to tyres for four-wheel vehicles for road use, such tyres suitable for equipping medium- and high-powered cars for transporting people (chord measurements ranging from 195 mm to 245 mm) but without any prejudice, the invention is also adapted for tyres for small utility vehicles or high performance tyres (HP high performances - UHP ultra high performances) with chord measurements ranging for example from 145 mm to 355 mm. With due adaptations, the present invention can be applied to tyres for different vehicles, such as motorcycles or heavy load vehicles for transporting people or things.

Preferably, in the finished tyre, said self-supporting elastomeric film has a thickness lower than about 50 µm.

Preferably, in the finished tyre, said self-supporting elastomeric film has a thickness greater than about 5 µm.

Preferably, in the finished tyre, said layer of sealing material has a thickness greater than about 2.0 mm and/or lower than 4 mm.

Preferably, the tyre comprises two elongated elements made of elastomeric material, each applied at a respective circumferential edge of the sealing assembly. Each elongated element made of elastomeric material has an axially internal portion, radially internal with respect to the sealing assembly and arranged in contact with said sealing assembly and a radially external portion arranged in contact with the liner.

Preferably, the layer of sealing material has an axial extension greater than the axial extension of the self-supporting elastomeric film and wherein each elongated element made of elastomeric material is in contact with said layer of sealing material and with said self-supporting elastomeric film in a manner so as to enclose and laterally retain the sealing material.

The elongated elements ensure the lateral adhesion of the sealing assembly to the liner.

The axially opposite edges of the self-supporting elastomeric film are maintained adherent to the sealing material by the overlap of each elongated element, which adheres to the respective lateral end of the sealing material itself.

The lateral elongated elements made of elastomeric compound contain the material during the shaping of the tyre and the vulcanisation, when the pressure inside the mould presses the carcass against the inner walls of the mould itself. The same elongated elements also prevent, during the shaping of the tyre, the self-supporting elastomeric film from separating from the sealing material at circumferentially axially opposite edges thereof.

The composite comprises a sealing assembly as previously described, preferably the composite also comprises a second removable protective film, which covers the surface of the sealing material that is opposite the surface that adheres to the first self-supporting elastomeric film. This second protective film preserves the integrity of the sealing material and prevents the adhesion of the sealing assembly to itself, when wound in the reel, or to parts of the machine during unrolling. This second protective film is then removed, generally before the cutting step, without damaging the integrity of the sealing material.

Generally the second protective film has a thickness lower than 100 µm, preferably lower than 50 µm.

Preferably the second protective film has width greater than that of the elastomeric film and also greater than that of the sealing material, more preferably it also has width greater than the total width of the semi-finished product, also preferably comprising the elastomeric elongated elements.

Preferably the second film comprises, more preferably it is constituted by, polymer materials such as polyesters, polyamides, polycarbonates, polyvinyl chlorides, generally rendered anti-adhesive with a layer of silicone or fluorinated polymer, or it is made of polytetrafluoroethylene, which does not require anti-adhesive treatments. Preferably the protective film is made of polyester, more preferably siliconised polyester, i.e. polyester made anti-adhesive with a silicone treatment. Preferably, said strip-like multilayer composite can also comprise two elongated elements made of elastomeric material, each applied at a respective edge of the sealing assembly.

Alternatively, said two elongated elements can be applied in a subsequent step, in the building apparatus at the time of cutting, or during the transport on the belts, or on the first-step building drum.

Further characteristics and advantages will be clearer from the detailed description of a preferred but not exclusive embodiment of a self-sealing tyre for vehicle wheels and of a composite comprising a sealing assembly in accordance with the present invention.

Such description will be set forth hereinbelow with reference to the enclosed drawings, provided only for indicative and hence non-limiting purposes, in which:
- figure 1 schematically shows, in radial half-section, a self-sealing tyre for vehicle wheels;
- figure 2 shows a section of a sealing assembly associated with two elongated elements made of elastomeric material and intended to form part of the self-sealing tyre of figure 1;
- figure 3 represents a section of a multilayer composite comprising the sealing assembly of the figure 2 and a second removable protective film;
- figure 4 is the comparative graphical representation of the relaxation of the stress of two self-supporting films polyamide-based (prior art comparison example) and polyurethane-based (according to the invention, ex. 1);
- figure 5 is a photograph that shows the corrugations of the self-supporting film, the deformation and the separation of the joint of a green semi-finished product comprising the sealing assembly with polyamide film according to WO2011064698;

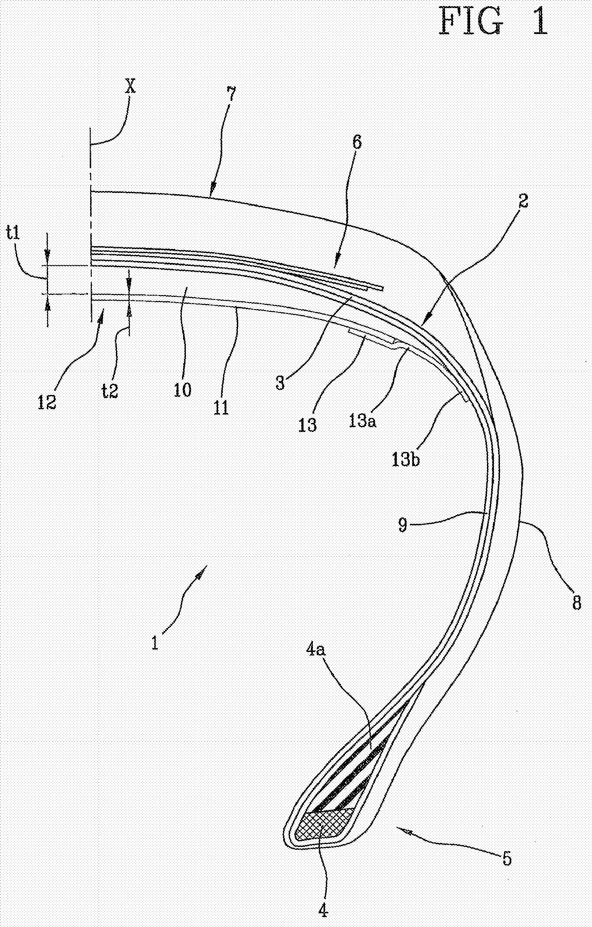

Indicated with reference number 1 in figure 1 is a self-sealing tyre for vehicle wheels, which generally comprises a carcass structure 2 comprising at least one carcass ply 3 having respectively opposite end flaps engaged with respective anchoring annular structures 4, possibly associated with elastomeric fillers 4a, integrated in the zones 5 normally identified with the name "beads". The at least one carcass ply 3 comprises a plurality of textile or metallic reinforcement cords arranged parallel to each other and at least partially covered with a layer of elastomeric material.

The carcass structure 2 is associated with a belt structure 6 comprising one or more belt layers, situated in radial superimposition with respect to each other and with respect to the carcass ply 3, typically having metallic reinforcement cords. Such reinforcement cords can have crossed orientation with respect to the circumferential extension direction of the tyre 1.

In radially external position with respect to belt structure 6, a tread band 7 is applied that is made of elastomeric compound, like other semi-finished products constituting the tyre 1.

Respective sidewalls 8 made of elastomeric compound are also applied in axially external position on the lateral surfaces of the carcass structure 2, each extended from one of the lateral edges of the tread band 7 to the respective anchoring annular structure to the beads 5.

A radially internal surface of the tyre 1 is also preferably internally covered with a substantially air-impermeable layer of elastomeric material, or so-called liner 9.

In the embodiment illustrated in figure 1, the tyre 1 is of the type for automobiles.

Typically in this case, the belt structure 6 further comprises at least one radially external layer comprising textile or metallic cords or textile/metallic cords in combination, arranged according to a substantially null angle with respect to the circumferential extension direction of the tyre.

In accordance with alternative embodiments of the present invention, the tyre 1 is of the type intended for use for heavy vehicles. With the expression "heavy vehicle" it is generally intended to indicate a vehicle belonging to the categories M2-M3, N1-N3 and O2-O4 defined in "Consolidated Resolution of the Construction of Vehicles (R.E.3) (1997)", Annex 7, pages 52-59, "Classification and definition of power-driven vehicles and trailers", such as trucks, tractors, buses, vans or other vehicles of this type.

In accordance with further embodiments of the present invention, the tyre 1 is for motor vehicles. The profile of the right section of the tyre for motor vehicles (not illustrated) has a high transverse curvature since it must ensure a sufficient footprint in all tilt conditions of the motor vehicle. The transverse curvature is defined by the value of the ratio between the distance f of the top of the tread from the line passing through the laterally opposite ends of the tread itself, measured on the equatorial plane of the tyre, and the width C defined by the distance between the laterally opposite ends of the tread itself. By tyre with high transverse curvature, a tyre is indicated whose transverse curvature ratio (f/C) is at least 0.20. Preferably (f/C) is respectively comprised between 0.20 and 0.5 for a rear tyre and between 0.35 and 0.6 for a front tyre.

The self-sealing tyre 1 according to the invention also comprises a layer of polymer sealing material 10 arranged at one crown zone of the tyre 1 and in radially internal position with respect to the liner 9. The layer of polymer sealing material 10 is extended for the entire circumferential extension of the tyre 1. The layer of sealing material 10 preferably has a maximum thickness "t1" substantially at the equatorial plane "X" of the finished tyre 1, i.e. moulded and vulcanised, and is thinned towards the axial ends of the crown zone (figure 1). Preferably, said maximum thickness "t1" is comprised between about 2 mm and about 6 mm, still more preferably between about 2.5 mm and 4.0 mm.

In the present description, with the term phr (acronym of "parts per hundred of rubbers"), it is intended to indicate parts by weight per 100 parts by weight of total elastomeric base. For the calculation of 100 parts of total elastomeric base, possible additives are not considered (like possible elastomeric resins or extension oils).

The sealing polymer material comprises, for example, from 20 phr to 100 phr of at least one unsaturated styrene thermoplastic elastomer, from 0 to 80 phr of at least one synthetic or natural diene elastomer, from 20 to 200 phr, preferably from 30 phr to 150 phr, of at least one bonding resin, from 0.1 to 6 phr of at least one cross-linking agent, from 10 phr to 200 phr, preferably from 20 phr to 60 phr, of plasticising agent (oil or liquid polymer), and preferably from 1 to 40 phr, preferably from 5 to 30 phr, of at least one reinforcement filler. According to a preferred embodiment, the sealing material can also comprise from about 1 phr to about 20 phr of at least one homogenising agent. In a further embodiment, the sealing material can also comprise from 0.05 phr to 5 phr of at least one peptising agent. According to a preferred embodiment, the unsaturated styrene thermoplastic elastomer is a styrene polymer selected from among styrene /butadiene /styrene (SBS), styrene /isoprene /styrene (SIS), and styrene/ butadiene/ isoprene/ styrene (SBIS) block copolymers, and mixtures thereof, also optionally comprising the corresponding diblock thermoplastic elastomers, such as styrene-butadiene (SB) and styrene-isoprene (SI). Particularly preferred are the styrene/ isoprene/ styrene block copolymers or mixture of one or more unsaturated styrene thermoplastic elastomers containing at least 50% styrene/ isoprene/ styrene block copolymer. Preferably the block copolymer has a styrene content from about 10% to about 30%, more preferably from about 12% to about 18%.

Preferably the block copolymer has a percentage of "diblock" lower than 70%, still more preferably lower than 60%.

Preferably the percentage of "diblock" is comprised between 15% and 55%.

With diblock percentage it is intended the percentage of block polymer constituted by only two segments: a polystyrene segment and an elastomeric segment.

Even if such "diblocks" are present in the block polymers mainly constituted by three segments - styrene-elastomer-styrene - and they are considered to be an impurity due to the imperfect efficiency of "living polymerisation", the Applicant deems that the presence of diblocks can be advantageously modulated for the purpose of improving the qualities of the sealing material.

It is deemed that a greater diblock percentage corresponds with a greater stickiness, but lower modulus and lower cohesion of the sealing material. Particularly preferred are styrene/ isoprene/styrene block copolymers with a styrene content equal to or lower than 20%, more preferably comprised between 14% and 20%.

Such copolymers are for example sold with the name of Europrene® SOL T190, T9133 by Polimeri Europa, Vector® 4113, 4114 by Dexco Polymers, Kraton® D1111, D1112 and D1107J by Kraton.

According to a preferred embodiment, the synthetic or natural elastomer included in the sealing material can be selected from among those commonly used among the elastomeric materials cross-linkable with sulfur or peroxides, which are particularly suitable for tyre production, that is from the elastomeric polymers or copolymers with an unsaturated chain having vitreous transition temperature (Tg) generally below 20°C, preferably in the range from 0°C to -110°C. These polymers or copolymers can be of natural origin or they can be obtained by means of polymerisation in solution, polymerisation in emulsion or polymerisation in gaseous phase of one or more conjugated diolefins, optionally mixed with at least one comonomer selected from among polar comonomers and/or monovinylarenes in a quantity not greater than 60% by weight. The conjugated diolefins generally contain from 4 to 12, preferably from 4 to 8 carbon atoms and can be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene or isoprene are particularly preferred.

The polar comonomers that may be used can be selected from among, for example: vinylpyridine, vinylquinoline, acrylic acid and alkylacrylic acid esters, nitriles, or mixtures thereof, such as, methyl acrylate, ethyl acrylate, methyl methacrylate, ethyl methacrylate, acrylonitrile, or mixtures thereof.

Preferably, the synthetic or natural elastomer included in the sealing material can be selected, for example, from among: cis-1,4-polyisoprene (natural or synthetic rubber, preferably natural rubber), 3,4-polyisoprene, polybutadiene (in particular polybutadiene with a high 1,4-cis content), possibly halogenated isoprene / isobutene copolymers, 1,3-butadiene / acrylonitrile copolymers, styrene / 1,3-butadiene copolymers, styrene / isoprene / 1,3-butadiene copolymers, styrene / 1,3-butadiene / acrylonitrile copolymers, or mixtures thereof.

The bonding agents advantageously used in the present invention can be selected from the group of hydrocarbon resins having an average numeric molecular weight comprised between several hundred and several thousand and which provide stickiness when the resin is mixed with natural or synthetic rubber.

As resins, various types of synthetic resins can be used. The aforesaid average numeric molecular weight (Mn) can be measured according to techniques known in the field, such as by means of gel permeation chromatography (GPC). In particular, as bonding agents the following can be used: hydrocarbon resins, phenol-based resins, carbon-based resins, xylene-based resins and natural resins such as rosin-based resins or terpene-based resins.

Examples of commercial products of hydrocarbon resins comprise aromatic petrol-based resins such as PETCOAL produced by Tosoh Co., Ltd.; C5/C9 hydrocarbon-based resins such as PETROTACK produced by Tosoh Co.; C5 hydrocarbon-based resins such as Escorez® 1102 (produced by Exxon Mobil). Examples of phenol-based resins comprise resins with alkylphenol-formaldehyde base, and derived resins modified with rosin, resins with alkylphenol-acetylene base, alkylphenol and terpene-phenol modified resins. Specific examples indicated by trademark comprise commercial products such as RESIN SP-1068 (produced by SI GROUP Inc.) which is an octylphenol-formaldehyde resin, and KORESIN (produced by BASF Company) which is a p-t-butylphenol-acetylene resin.

Examples of carbon-based resins include coumarone-indene resins. Specific examples comprise commercial products, mentioned by trademark, such as NOVARES C resins (produced by RUTGERS CHEMICAL GmbH) which are synthetic coumarone-indene resins (such as NOVARES C10, C30, and C70).

Examples of natural resins are the rosin resins and the terpene resins, which can be used as they are or modified: examples of these classes are the DERCOLYTE terpene resins produced by DRT, the resins derived from rosin acids DERTOLINE, GRANOLITE and HYDROGRAL produced by DRT.

Examples of xylene-based resins comprise the xylene-formaldehyde resins.

The aforesaid bonding agents can be used on their own or mixed together.

Suitable cross-linking agents are sulfur or molecules containing sulfur, in the presence of compounds containing zinc and fatty acids, or peroxides.

Specific examples of molecules containing sulfur usable as cross-linking agents in the sealing materials for the obtainment of self-sealing tyres are elementary sulfur, thiurams, such as tetraisobutyl thiuram disulfide or tetrabenzyl thiuram disulfide), or dithiophosphates, such as zinc dibutyldithiophosphate, or dithiocarbamates, such as zinc dimethyl dithiocarbamate, together with ZnO or compounds containing zinc, fatty acids and sulfenamides, such as N-tert-butyl-2-benzothiazyl sulfenamide (TBBS) or N-cyclohexyl-2-benzothiazyl sulfenamide (CBS), or thiazoles, such as 2,2'-dithiobis-(benzothiazole) (MBTS).

Specific examples of peroxides usable as cross-linking agents in the sealing materials for the obtainment of self-sealing tyres are organic peroxides such as dicumyl peroxide (DCP), 2,5-dimethyl-2,5-di(tert-butyl-peroxy)hexane (DBPH), bis-(2,4-dichlorobenzoyl) peroxide (DCBP), di-tert-butyl-peroxide.

Preferably a peroxide, still more preferably 2,5-dimethyl-2,5-di(tert-butyl-peroxy)hexane (DBPH) is used as cross-linking agent.

A specific example of usable DBPH is a mixture of 45% DBPH with calcium carbonate and silica sold with the name Luperox 101 XL45 by Arkema.

The quantity of peroxide is preferably comprised between about 0.1 phr and about 6 phr.

The presence of peroxide or sulfur or another cross-linking agent allows the partial chemical cross-linking of the sealing composition during the vulcanisation of the tyre in a manner so as to improve the dynamic sealing characteristics of the sealing material layer.

At least one reinforcement filler can be advantageously added to the abovementioned cross-linkable elastomeric composition, in a quantity generally from 0 phr to 120 phr, preferably from 10 phr to 50 phr. The reinforcement filler can be selected from among those commonly used for cross-linked products, in particular for tyres, such as carbon black, silica, aluminium, aluminosilicates, calcium carbonate, kaolin or mixtures thereof. Carbon black, silica and mixtures thereof are particularly preferred.

According to a preferred embodiment, said carbon black reinforcement filler can be selected from among those which have a surface area not less than 20 m2/g (determined by STSA - statistical thickness surface area - according to ISO 18852:2005).

In radially internal position with respect to the sealing polymer material layer 10 and in contact with said sealing polymer material layer 10, a self-supporting elastomeric film 11 is arranged which is made of elastomeric polyurethane. The self-supporting elastomeric film 11 is extended, as the sealing polymer material layer 10, over the entire circumferential extension of the tyre 1 and has a width, i.e. an axial extension, slightly less than the axial extension of said layer 10. Preferably, said self-supporting elastomeric film 11 is made of elastomeric polyurethane selected from among those sold with the name of Argotec 19205 (polyether), Argotec 19103 (polyether), Epurex U073 (polyether), Epurex 4201AU (polyether) and Epurex 4100D (polyester), on their own or in combination. Preferably, the self-supporting elastomeric film 11 has elongation at break greater than 100%, more preferably greater than 200%, still more preferably equal to or greater than 250%.

Preferably, in the finished tyre, said self-supporting elastomeric film 11 has a thickness "t2" comprised between about 5 µm and about 40 µm.

The sealing polymer material layer 10 and the self-supporting elastomeric film 11 form a sealing assembly 12. The sealing assembly 12, when a sharp-pointed element (such as a nail) penetrates into the tyre and traverses the sealing polymer material layer 10 and the self-supporting film 11, is able to adhere to the object inserted therein and can also flow inside the hole when such object is removed, in such a manner sealing the hole itself and preventing the outflow of air from the tyre. The sealing assembly 12 can be easily perforated by the sharp-pointed element while maintaining a deformability and a stickiness such to contribute to the transfer of the sealing compound during the expulsion of the sharp-pointed element. The perforations thus sealed are clearly visible on the surface of the sealing assembly, through the elastomeric self-supporting film 11.

The tyre 1 also preferably comprises two elongated elements made of elastomeric material 13, each arranged at a circumferential edge of the sealing assembly 12. An axially internal portion 13a of each elongated element made of elastomeric material 13 is preferably superimposed on the sealing assembly 12 and is arranged in radially internal position with respect to said sealing assembly 12. An axially external portion 13b of each elongated element made of elastomeric material 13 lies in direct contact with the liner 9. By axially internal portion 13a, it is intended a portion closer to an equatorial plane "X" of the tyre 1 with respect to the axially external portion 13b.

More in detail, the axially internal portion 13a in turn has an axially internal zone applied directly on the self-supporting elastomeric film 11 and an axially external zone applied directly on one surface of the sealing polymer material layer 10. Indeed, the sealing polymer material layer 10 has an axial extension greater than the axial extension of the self-supporting elastomeric film 11. It follows that each elongated element made of elastomeric material 13 is in direct contact both with the sealing polymer material layer 10 and with the self-supporting elastomeric film 11.

The building of a green precursor of a tyre 1 as described above, comprising the sealing assembly 12, is preferably actuated by means of assembly of respective semi-finished products on one or more forming supports, not illustrated.

The carcass structure and the belt structure are generally made separately from each other in respective work stations, in order to be mutually assembled at a later time.

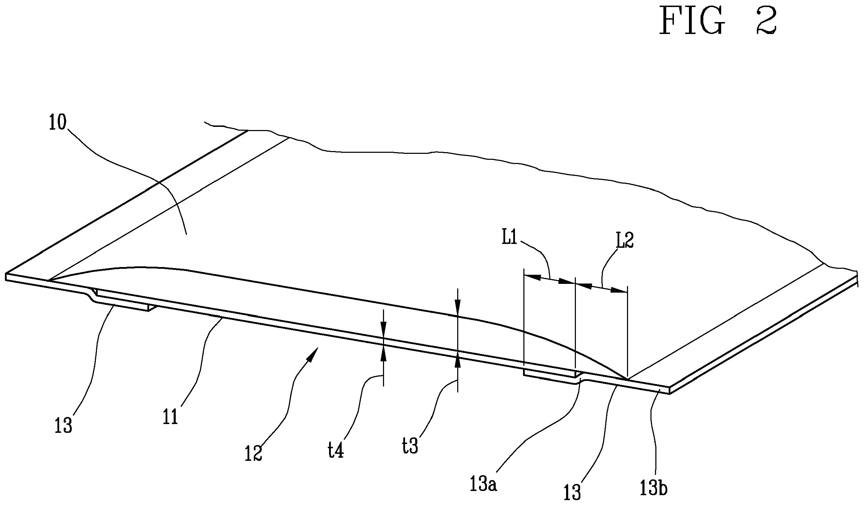

More particularly, the obtainment of the carcass structure first provides for the formation of the sealing assembly 12 as a continuous strip comprising the layer of sealing material 10 arranged on and supported by the self-supporting elastomeric film 11 joined to the elongated elements made of elastomeric material 13 associated with opposite longitudinal edges of the abovementioned sealing assembly 12 (figure 2). Preferably, before the incorporation of the sealing assembly 12 in the precursor of the tyre 1 and the shaping thereof, each elongated element 13 is in contact with the self-supporting elastomeric film 11 for a first width "L1" and with the layer of sealing material 10 for a second width "L2". Said widths are preferably substantially equal to each other.

The sealing layer 10, before the incorporation of the sealing assembly 12 in the precursor of the tyre 1 and the shaping thereof, has a thickness "t3" comprised between about 3 mm and about 7 mm.

The self-supporting elastomeric film 11, before the incorporation of the sealing assembly 12 in the precursor of the tyre 1 and the shaping thereof, has a thickness "t4" lower than 100 µm and preferably comprised between about 10 and 60 µm.

The sealing assembly 12 provided with the respective elongated elements made of elastomeric material 13 is cut to size, preferably with angled (chamfer) cutting and wound around a radially external surface of a building drum, maintaining the thermoplastic film 11 in radially more internal position. Opposite end flaps of the sealing assembly 12 are mutually joined due to the adhesivity of the sealing compound; preferably the joint is covered (to prevent the outflow of sealing material during vulcanisation) and consolidated by means of an adhesive tape (joint), for example.

The liner 9 and the carcass ply or plies 3 are applied on the sealing assembly 12 to form a so-called "carcass sleeve", typically substantially cylindrical. The anchoring annular structures 4 to the beads 5 are fit or formed on the opposite end flaps of the carcass ply or plies 3, which are subsequently turned up around the annular structures 4 themselves so as to enclose them in a kind of noose.

On a second drum or auxiliary drum, a so-called "external sleeve" is obtained comprising the belt layers 6 applied in mutual radial superimposition, and possibly the tread band 7 applied in radially external position with respect to the belt layers 6. The external sleeve is then picked up by the auxiliary drum in order to be coupled to the carcass sleeve. For such purpose, the external sleeve is arranged coaxially around the carcass sleeve, after which the carcass ply or plies 3 are shaped according to a toroidal configuration by means of mutual axial approaching of the beads 5 and simultaneous insertion of pressurised fluid inside the carcass sleeve, in a manner so as to determine a radial expansion of the carcass plies 3 until they are made to adhere against the internal surface of the external sleeve. Following the shaping, the elastomeric film shows a relaxation of tension such that the residual elastic tension does not cause a deformation of the green tyre or cause the separation of its radially internal layers. The residual elastic force of the film about 5 minutes after attaining a deformation between 20% and 50% (using a deformation speed of 500 mm/min, on a rectilinear 200 mm x 20 mm specimen preloaded to 0.4 N) must be less than 3 N/cm (Newton per linear centimetre of width of the film), preferably less than 2.5 N/cm, more preferably less than 2 N/cm.

The assembly of the carcass sleeve with the external sleeve can be actuated on the same drum used for obtaining the carcass sleeve, in which case this is termed a "single-step building process" or "unistage process". Also known are building process of so-called "two-step" type, in which a so-called "first-step drum" is employed for obtaining the carcass sleeve, while the assembly between the carcass structure and the external sleeve is actuated on a so-called "second-step drum" or "shaping drum" onto which the carcass sleeve picked up from the first-step drum is transferred and, subsequently, onto which the external sleeve picked up from the auxiliary drum is transferred.

Following the building of the green tyre 1, a moulding and vulcanisation treatment is executed, aimed to cause the structural stabilisation of the tyre 1 by means of cross-linking of the elastomeric compounds as well as impart on the tread band 7 a desired tread pattern and to impart at the sidewalls 8 possible distinctive graphic marks. During vulcanisation, between the elastomer macromolecules, a lattice of covalent bonds is developed which, depending on its intensity, prevents the sliding thereof, rendering the material increasingly insoluble, infusible and elastic. After vulcanisation, the layer of sealing material 10 attains optimal characteristics of deformability, cohesion and stickiness.

During vulcanisation, notwithstanding the high temperatures employed, the self-supporting elastomeric film 11 and the sealing material 10 remain integral, they do not damage the vulcanisation membrane, and they attain optimal sealing performances.

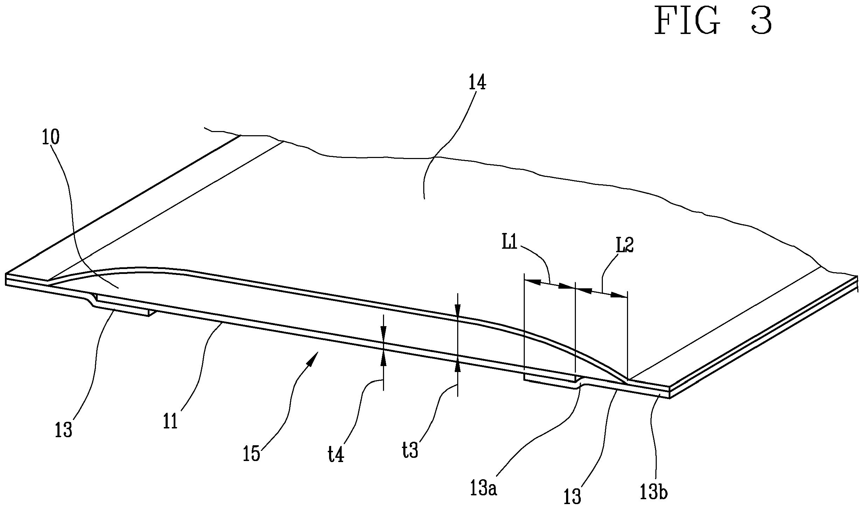

In Figure 3, the sealing assembly 10 of figure 2 is covered with a second removable protective film 14 to give rise to the multilayer composite 15. The multilayer composite 15 can be prepared, e.g. via extrusion of the sealing material 10 on the second protective film 14 and mechanical coupling with the self-supporting elastomeric film 11 and the lateral elongated elements 13, to give rise to the strip-like composite, which is cooled and generally preserved wound in a reel.

### EXAMPLES

### Traction test

In order to characterise the self-supporting film, a traction test was executed on two specimens of Platilon U4201AU with 50 nominal micron thickness according to the ASTM D882 standard, in the following test conditions:
- test temperature 23°C
- relative humidity 46%
- test speed = 500 mm/min
- specimen width 12.57 mm

The results of the test are reported in the following table 1.

**TABLE 1**

| Sample | Elongation at break |
|---|---|
| | (%) |
| 1 | 311 |
| 2 | 314 |

### Residual force test

A test was also executed for comparing the residual force on two samples of film (200 mm x 20 mm, cut in longitudinal direction with respect to the extension of the film reel and preloaded to 0.4 N), the first according to the invention of TPU Platilon U4201AU with 50 nominal micron thickness and the second of polyamide Filmon CXS18, with 18 nominal micron thickness. The specimen was conditioned for 24 hours at 23°C and 45% relative humidity.

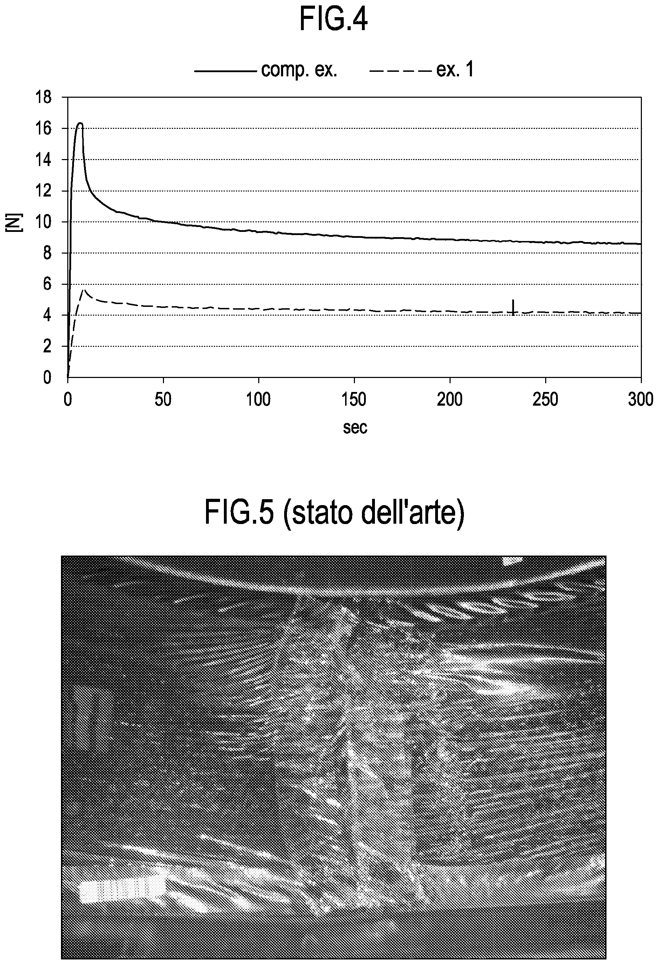

The test was executed by means of Zwic model 1445 dynamometer; the force values encountered in the test, which involved an elongation up to 30% at the speed of 500 mm/sec and the subsequent maintenance of such deformation for 5 minutes overall, are reported in figure 4.

With the sample made of TPU according to the invention (example 1), the residual force exerted in the step of maintaining the deformation after traction is always lower than that of the sample made of polyamide (comparative example) and remains on values below 5 N (i.e. 2.5 N/cm of width) with respect to values for the polyamide sample of around 8 N (i.e. 4 N/cm of width of the specimen). It is surprising that for a small reduction of the residual force of the film made of TPU with respect to that made of polyamide, such a considerable improvement is observed of the stability over time of the green tyre, and in particular of the joint of the semi-finished product, which passes from a few hours (after 16 hours the semi-finished products with Nylon have extended detachments at the joint and elongated elements) to over 48 h (with TPU, significant openings of the joint are not observed, nor are any detachments of the elongated elements seen for at least 2-3 days).

### Sealing material

The sealing composition of the following table 2 has been used in the preparation of the sealing layer.

**TABLE 2**

| Components | phr |
|---|---|
| IR | 50 |
| SBR | 30 |
| SIS | 20 |
| Luperox 101 XL45 | 0.6 |
| Process oil | 45 |
| 6-PPD | 2 |
| Escorez® 1102 | 40 |
| Struktol® 40MS | 7 |
| N326 | 12 |

In the preceding table 2:
IR is an cis-1,4-polyisoprene elastomer produced by Nizhnekamskneftechim Export, Russia;
SBR is a styrene-butadiene elastomeric copolymer produced by International Specialty Products (ISP);
SIS is a Styrene-Isoprene-Styrene block copolymer produced by Polimeri Europa with the name of Europrene® SOL T190
Luperox 101 XL45 is a peroxide produced by Arkema
Process oil (MES - mild extraction solvates) is a mineral-based oil, highly-refined via solvent and\or via water treatment (Catenex SNR produced by Shell); Escorez® 1102 is an aliphatic bonding resin produced by ExxonMobil;
6-PPD is N-(1,3-Dimethylbutyl)-N'-phenyl-p-phenylenediamine, antioxidant and antiozonant produced by Eastman;
Struktol® 40MS is a mixture of aromatic aliphatic-naphthenic hydrocarbon resins (Struktol Corporation);
N326 is carbon black.

The layer of sealing material, before tyre building, had a thickness of about 4.0 mm and the sealing assembly was arranged in radially internal position with respect to the liner (as illustrated in Fig. 1).

The moulded and vulcanised tyres were mounted on a standard rim and inflated to a pressure of 2.4 bar.

### Mechanical stability of the semi-finished product

In the scope of the above-described test, we also measured the force for a 10% elongation per cm of width of various film samples - comparative and according to the invention - as indicator of the mechanical stability of the semi-finished product. With the term semi-finished product, it is intended the sealing assembly, comprising the self-supporting film and the sealing material and, preferably, the two elongated elements.

The types of film tested and the respective measured force intervals are compiled in the following Table 3:

**TABLE 3**

| Film material | Force for 10% elongation (N/cm width) | Nominal thickness (micron) |
|---|---|---|
| polyamide | 5 - 7 | 18 |
| TPU | 0.8 - 1 | 25 |
| TPU | 1.6 - 2 | 50 |

As polyamide, samples of Filmon CXS18 were used, as TPU samples of Argotec 19205, Epurex 4201AU and Epurex 4100DK were used.

A photograph is shown in Fig. 5 of the green semi-finished product comprising the sealing assembly of a tyre of size 235/40 R18 according to WO2011064698 with polyamide film, joined with adhesive tape and fixed with lateral elongated elements, 16 hours after shaping, which involves a stretching of about 20% of the sealing assembly and of the self-supporting film. From the photograph, the instability of the semi-finished product is clear; this is evident with the separation of the joint and the deformation at the lateral elongated elements.

### Recycling of the semi-finished product

In the experience of the Applicant, it has been technically difficult and complex to recycle the strip-like semi-finished product comprising the sealing compound, the self-supporting film and preferably the lateral elongated elements (hence lacking the second removable protective film), when the support film has polyamide base. Indeed, it has been found that pieces of film of size between several mm² and a few cm² pollute the resulting compound, not allowing the correct extrusion thereof. Removing these polyamide fragments via filtration is quite difficult and not very effective.

The present film made of elastomeric polyurethane, even if much more polar than the components of the sealing compound and hence not very compatible therewith from the chemical standpoint - analogous to the polyamides - surprisingly allows an easy recycling of the semi-finished product.

It has been observed that, by introducing into the formulation of the sealing compound a part of semi-finished product (comprising the sealing compound, the self-supporting film and the elongated elements, but lacking the second removable protective film) equal to about 10-20% by weight of the original formulation, one obtains a compound that is not polluted by macroscopic fragments of film - subjecting it to filtration through two steel nets with 18 mesh density (0.88 mm² opening) mounted at 45°, no material is retained - and it has performances comparable to those of the original compound.

### Example 1

The semi-finished product to be recycled, constituted by the elastomeric film made of TPU Platilon U4201AU with 50 nominal micron thickness, sealing material (with composition as in example 2, thickness 4 mm) and 25 x 1 mm lateral elongated elements made of rubber, was added in a Banbury in a quantity of 25 phr (about 10% of the finished compound) to the Master compound constituted by the polymers, by the carbon black CB, by the 6-PPD and by the Struktol 40MS; the resulting masterbatch was then used for preparing a compound according to the formula reported in the following table 4:

**TABLE 4**

| | Reference compound phr | Compound with 50 nominal micron TPU film recycling phr |
|---|---|---|
| IR | 50 | 50 |
| SBR | 30 | 30 |
| SIS | 20 | 20 |
| semi-finished product RECYCLING | -- | 25 |
| N 326 | 12 | 12 |
| 6-PPD | 2 | 2 |
| Struktol 40MS | 7 | 7 |
| MES | 45 | 45 |
| Escorez® 1102 | 40 | 40 |
| Luperox 101 XL45 | 0.6 | 0.6 |

| | | |
|---|---|---|
| Key: IR is an cis-1,4-polyisoprene elastomer produced by Nizhnekamskneftechim Export, Russia; SBR is a styrene-butadiene elastomeric copolymer produced by International Specialty Products (ISP); SIS is a Styrene-Isoprene-Styrene block copolymer produced by Polimeri Europa with the name of Europrene® SOL T190 Luperox 101 XL45 is a peroxide produced by Arkema; N326 is carbon black; 6-PPD is N-(1,3-Dimethylbutyl)-N'-phenyl-p-phenylenediamine, antioxidant and antiozonant produced by Eastman; Struktol® 40MS is a mixture of aromatic aliphatic-naphthenic hydrocarbon resins (Struktol Corporation); Process oil (MES - mild extraction solvates) is a mineral-based oil, highly-refined via solvent and\or via water treatment (Catenex SNR produced by Shell); Escorez® 1102 is an aliphatic bonding resin produced by ExxonMobil. | | |

The two compounds were used for preparing two semi-finished strip-like products according to the invention, with 4 mm thickness, comprising a self-supporting film made of TPU Platilon U4201AU with 50 nominal micron thickness and lateral elongated elements made of rubber. The preparation of the two semi-finished products took place via extrusion of each compound through an extrusion head preceded by a filter constituted by two steel nets with 18 mesh density (0.88 mm² opening) mounted at 45°: the pressure of the compound upstream of the filter remained constant for the time of preparation of both semi-finished products (1 hour) and the filter lacked contaminants in both cases. The geometry of the semi-finished product resulted analogous for the two compounds.

The two semi-finished products were used for the preparation of self-sealing tyres with size 235/40 R18, which have shown sealing performances, both static and dynamic, that are entirely analogous.

### Static sealing test:

Self-sealing tyres of size 235/40R18 were prepared, comprising a sealing assembly with thickness of about 3 mm comprising a sealing composition together with a self-supporting thermoplastic elastomeric film of TPU Platilon U4201AU with 50 nominal micron thickness (invention), and self-sealing tyres were prepared comprising a sealing assembly with thickness of about 3 mm comprising a self-supporting film made of polyamide with 18 nominal micron thickness, according to the patent application WO2011064698.

5 and 10 mm diameter nails, having 40 mm length, were radially inserted through the tread of the self-sealing tyres inflated to a pressure of 240 kPa.

The zone of the tread to be perforated corresponded with the belts. The arrangement of the nails comprised lugs and grooves and was circumferentially random. The inserted nails were extracted and the possible outflow of air was controlled with a solution of soapy water.

With the film according to the present invention, for the thicknesses of sealing material employed, equal to about 3 mm in the vulcanised tyre, a lack of sealing of the holes with 10 mm diameter was observed, ensuring greater safety for the user in road travel. Therefore, with both assemblies, it is possible to modulate and make selective the sealing performance as a function of the diameter of the perforating sharp-pointed element.

**TABLE 5- static sealing**

| | 5 mm | 10 mm |
|---|---|---|
| Comparative (18 nominal micron film made of polyamide) | 100% | Air loss |
| Invention (50 nominal micron film made of TPU Platilon U4201AU) | 100% | Air loss |

### Dynamic tests:

1) Nails with 3, 4, 5 mm diameter, having 40 mm length, were inserted through the tread of a self-sealing tyre according to the invention (film made of TPU, Platilon U4201AU with 50 nominal micron thickness and about 3 mm of sealing compound) and of a tyre according to WO2011064698 (film made of polyamide, 18 nominal micron thickness and about 3 mm of sealing compound) inflated to a pressure of 240 kPa,.
   The zone of the tread to be perforated corresponded to the belts. The arrangement of the nails comprised lugs and grooves and was circumferentially random.
   The tyres were rolled, with the nails inserted, on a so-called "wheel road", a disc with 2.8 m diameter, at the speed of 120 km/h with a load of 550 kg.
2) 500 km were travelled with the two tyres, alternating 10 minute periods with null slip angle and 10 minute periods with slip angle oscillating from -6° to +6°. The slip speed was 1°/s: for each slip cycle, 25 oscillations were completed. The tyres did not lose air through the entire test period.
3) The inserted nails were extracted and 10 km were travelled with 550 kg load and slip angle oscillating from -2° to +2°. The loss of air from the holes was controlled with a solution of soapy water.

The obtained results are summarised in the following table 6, bearing both the number of nails for each diameter and the number of seals obtained as overall number and as percentage.

**TABLE 6**

| Sealing at 500 km, TPU film (invention) | | | |
|---|---|---|---|
| inserted nails diameter | 3 mm | 4 mm | 5 mm |
| number of inserted nails | 12 | 12 | 12 |
| number of holes sealed after extraction | 12 | 12 | 10 |
| sealing % | 100 | 100 | 83 |

| Sealing at 500 km, polyamide film (WO2011064698) | | | |
|---|---|---|---|
| inserted nails diameter | 3 mm | 4 mm | 5 mm |
| number of inserted nails | 12 | 12 | 12 |
| number of holes sealed after extraction | 12 | 10 | 7 |
| sealing % | 100 | 83 | 58 |

From the data reported in table 6, it is clear that a tyre according to the present invention, given the same composition and thickness of the sealing compound of the sealing assembly, has a greater sealing capacity than a tyre as described in WO2011064698.

### Test of visual evaluation of the perforations

The tyres of the preceding dynamic test, according to the invention (film made of TPU) and according to WO2011064698 (film made of polyamide), each with 36 perforations, were subjected to observation at the radially more internal surface, in order to verify if and how many perforations could be easily identified via visual inspection.

In a visual test, 3 observers provided the following evaluations:

**TABLE 7: holes detected out of the 36 holes present**

| | Tyre of the invention (polyurethane film) | Comparative tyre (polyamide film) |
|---|---|---|
| Observer A | 33 (92%) | 12 (33%) |
| Observer B | 36 (100%) | 18 (50%) |
| Observer C | 34 (94%) | 8 (22%) |

The tyre of the invention was provided with a sealing assembly according to that described above, the comparative tyre was obtained according to WO2011064698.

The collected data permit concluding that a tyre according to the present invention allows detecting the perforations present by simple visual inspection in a much more effective manner with respect to such visual inspection of known tyres.

## Claims

1. A self-sealing tyre for vehicle wheels comprising:
at least one carcass ply (3), a tread band (7) applied in a radially external position with respect to said carcass ply in a crown region, at least one liner (9) applied in radially internal position with respect to said carcass ply, a sealing assembly (12) applied in radially internal position with respect to the liner and axially extended at least at a part of the crown portion of the tyre;
wherein said sealing assembly (12) comprises a self-supporting elastomeric film (11) comprising at least 50% by weight with respect to the weight of the film itself of a thermoplastic elastomeric polyurethane (TPU), and a layer of sealing material (10) associated with and supported by said self-supporting elastomeric film (11);
wherein-the self-supporting elastomeric film (11) is radially internal with respect to the layer of sealing material (10) and said layer of sealing material is arranged substantially in contact with the liner (9).

2. The tyre of claim 1 wherein said sealing assembly is axially extended at least for 60% of the crown portion the tyre.

3. The self-sealing tyre for vehicle wheels as claimed in claims 1 to 2 wherein said sealing assembly extends axially at least for the entire crown portion the tyre.

4. The self-sealing tyre for vehicle wheels as claimed in one of claims 1 to 3, wherein said self-supporting elastomeric film has a thickness lower than 50 µm and/or greater than 5 µm.

5. The self-sealing tyre for vehicle wheels as claimed in one of claims 1 to 4, wherein said layer of sealing material has a thickness greater than about 2.0 mm and/or lower than 4 mm.

6. A strip-like multilayer composite comprising
a sealing assembly (12) and
a removable protective film (14)
wherein said sealing assembly comprises a self-supporting elastomeric film (11) comprising at least 50% by weight with respect to the weight of the film itself of a thermoplastic elastomeric polyurethane, and a layer of sealing material (10) having a first and a second main surface opposite each other, said layer of sealing material (10) being associated with and supported by said self-supporting elastomeric film (11), at the level of the first surface, and
wherein said removable protective film is arranged substantially in contact with the second surface of said sealing material.

7. The composite as claimed in claim 6 wherein said removable protective film has a thickness lower than 100 µm, preferably lower than 50 µm.

8. The composite as claimed in one of claims 6 or 7 wherein said removable protective film comprises a polymeric material selected from among polyesters, polyamides, polycarbonates, polyvinyl chlorides and fluorinated polyolefins.

9. The tyre or the composite as claimed in any one of the preceding claims wherein said self-supporting elastomeric film, comprises at least 50% by weight, preferably at least 70%, 80%, 90%, 95% by weight, more preferably it essentially consists of at least one thermoplastic elastomeric polyurethane or mixtures of two or more thermoplastic elastomeric polyurethanes.

10. The tyre or the composite as claimed in any one of the preceding claims wherein said thermoplastic elastomeric polyurethane is obtained through the polymerisation of aromatic isocyanates, more preferably through the polymerisation of aromatic diisocyanates selected from among naphthalene diisocyanate, para-phenyl diisocyanate, toluene diisocyanate (TDI) and methylene diphenyl diisocyanate (MDI).

11. The tyre or the composite as claimed in any one of the preceding claims wherein said thermoplastic elastomeric polyurethane is **characterised by** a hardness (Shore A according to the ASTM D-2240 standard at 23°C) greater than 70, preferably greater than 80, more preferably greater than 85.

12. The tyre or the composite as claimed in any one of the preceding claims wherein said self-supporting elastomeric film is further **characterised by** one or more of the following parameters:
- Elongation at break greater than 150%, more preferably greater than 200%, even more preferably equal to or greater than 250%, evaluated according to the ASTM D882 standard on 12.57 mm width test deformed at the speed of 500 mm/min at 23°C;
- Force for a 10% elongation per linear centimetre of width preferably greater than 0.4 N/cm, more preferably greater than 0.6 N/cm, even more preferably comprised between 1 and 4 N/cm;
- Residual force per linear centimetre of width of the film after about 5 minutes from attaining the 35% deformation preferably lower than 3.0 N/cm, more preferably lower than 2.5 N/cm, even more preferably lower than 2.0 N/cm,
said forces being evaluated on a cut specimen with 20 mm width and 200 mm length, with nominal thickness comprised between 10 and 100 µm, preloaded to 0.4 N and pulled at 500 mm/min up to 35% of deformation and then maintained in the deformed state for 5 minutes.

13. The tyre or the composite as claimed in any one of the preceding claims wherein said self-supporting elastomeric film, before the shaping, has a thickness comprised between 10 µm and 100 µm, preferably between 20 and 80 µm, more preferably between 25 and 70 µm, even more preferably between 25 and 50 µm.

14. The tyre or the composite as claimed in any one of the preceding claims wherein said layer of sealing material, before the shaping, has a thickness lower than 7 mm, preferably lower than 6 mm, more preferably lower than 5 mm, and/or greater than about 2 mm, preferably greater than 2.5 mm, more preferably between 3 and 4.5 mm.

15. The tyre or the composite as claimed in any one of the preceding claims further comprising two elongated elements made of elastomeric material, each applied at a respective circumferential or longitudinal edge of said sealing assembly.

## Patentansprüche

1. Selbstdichtender Reifen für Fahrzeugräder, umfassend:
zumindest eine Karkassenlage (3), einen Laufflächenring (7), der in einer radial äußeren Position in Bezug auf die Karkassenlage in einer Zenithregion angebracht ist, zumindest einen Mantel (9), der in einer radial inneren Position in Bezug auf die Karkassenlage angebracht ist, eine Dichtungsanordnung (12), die in einer radial inneren Position in Bezug auf den Mantel angebracht ist und sich axial zumindest an einem Teil des Zenithabschnitts des Reifens erstreckt;
wobei die Dichtungsanordnung (12) eine selbsttragende Elastomerfolie (11) umfasst, die zumindest 50 Gew.-% bezogen auf das Gewicht der Folie selbst eines thermoplastischen Polyurethan-Elastomers (TPU) umfasst, und eine Lage aus Dichtmaterial (10), die der selbsttragenden Elastomerfolie (11) zugeordnet ist und von dieser getragen wird;
wobei die selbsttragende Elastomerfolie (11) radial einwärts in Bezug auf die Lage aus Dichtmaterial (10) liegt, und die Lage aus Dichtmaterial im Wesentlichen in Kontakt mit dem Mantel (9) angeordnet ist.

2. Reifen nach Anspruch 1, wobei die Dichtungsanordnung sich axial über zumindest 60 % des Zenithabschnitts des Reifens erstreckt.

3. Selbstdichtender Reifen für Fahrzeugräder nach den Ansprüche 1 bis 2, wobei die Dichtungsanordnung sich axial zumindest über den gesamten Zenithabschnitts des Reifens erstreckt.

4. Selbstdichtender Reifen für Fahrzeugräder nach einem der Ansprüche 1 bis 3, wobei die selbsttragende Elastomerfolie eine Dicke von weniger als 50 µm und/oder größer als 5 µm aufweist.

5. Selbstdichtender Reifen für Fahrzeugräder nach einem der Ansprüche 1 bis 4, wobei die Lage aus Dichtmaterial eine Dicke von mehr als etwa 2,0 mm und/oder weniger als 4 mm aufweist.

6. Streifenförmiger, mehrlagiger Verbundstoff, umfassend
eine Dichtungsanordnung (12) und
eine entfernbare Schutzfolie (14),
wobei die Dichtungsanordnung umfasst a selbsttragende Elastomerfolie (11), die zumindest 50 Gew.-% bezogen auf das Gewicht der Folie selbst eines thermoplastischen Polyurethan-Elastomers umfasst, sowie eine Lage aus Dichtmaterial (10) mit einer ersten und einer zweiten Hauptoberfläche, die einander entgegengesetzt sind, wobei die Lage aus Dichtmaterial (10) der selbsttragenden Elastomerfolie (11) auf der ersten Oberfläche zugeordnet ist und von dieser getragen wird, und
wobei die entfernbare Schutzfolie im Wesentlichen in Kontakt mit der zweiten Oberfläche des Dichtmaterials angeordnet ist.

7. Verbundstoff nach Anspruch 6, wobei die entfernbare Schutzfolie eine Dicke von weniger als 100 µm, vorzugsweise weniger als 50 µm aufweist.

8. Verbundstoff nach einem der Ansprüche 6 oder 7, wobei die entfernbare Schutzfolie ein Polymermaterial umfasst, das ausgewählt ist aus Polyestern, Polyamiden, Polycarbonaten, Polyvinylchloriden und fluorierten Polyolefinen.

9. Reifen oder Verbundstoff nach einem der vorhergehenden Ansprüche, wobei die selbsttragende Elastomerfolie zumindest 50 Gew.-%, vorzugsweise zumindest 70 Gew.-%, 80 Gew.-%, 90 Gew.-%, 95 Gew.-% zumindest eines thermoplastischen Polyurethan-Elastomers oder Mischungen aus zwei thermoplastischen Polyurethan-Elastomeren umfasst, oder noch bevorzugter im Wesentlichen daraus besteht.

10. Reifen oder Verbundstoff nach einem der vorhergehenden Ansprüche, wobei das thermoplastische Polyurethan-Elastomer erhalten wird durch die Polymerisation aromatischer Isocyanate, noch bevorzugter durch die Polymerisation aromatischer Diisocyanate ausgewählt aus Naphthylendiisocyanat, Paraphenyldiisocyanat, Toluoldiisocyanat (TDI) und Methylendiphenyldiisocyanat (MDI).

11. Reifen oder Verbundstoff nach einem der vorhergehenden Ansprüche, wobei das thermoplastische Polyurethan-Elastomer **gekennzeichnet ist durch** eine Härte (Shore A nach der Norm ASTM D-2240 bei 23 °C) von mehr als 70, vorzugsweise mehr als 80, noch bevorzugter mehr als 85.

12. Reifen oder Verbundstoff nach einem der vorhergehenden Ansprüche, wobei die selbsttragende Elastomerfolie weiter durch einen oder mehrere der folgenden Parameter gekennzeichnet ist:
- eine Bruchdehnung von mehr als 150 %, noch bevorzugter mehr als 200 %, sogar noch bevorzugter gleich oder mehr als 250 %, bewertet nach der Norm ASTM D882 mit 12,57 mm Breite, verformt mit einer Geschwindigkeit von 500 mm/min bei 23 °C;
- eine Kraft für eine Dehnung von 10 % pro Linearzentimeter Breite von vorzugsweise mehr als 0,4 N/cm, noch bevorzugter mehr als 0,6 N/cm, sogar noch bevorzugter zwischen 1 und 4 N/cm;
- Restkraft pro Linearzentimeter Breite der Folie nach etwa 5 Minuten ab Erreichen der Verformung von 35 % vorzugsweise weniger als 3,0 N/cm, noch bevorzugter weniger als 2,5 N/cm, sogar noch bevorzugter weniger als 2,0 N/cm,
wobei die Kräfte an einer geschnittenen Probe mit 20 mm Breite und 200 mm Länge und einer nominellen Dicke zwischen 10 und 100 µm bewertet wurden, die mit 0,4 N vorgespannt und mit 500 mm/min auf eine Verformung von bis zu 35 % gestreckt wurde, und anschließend für 5 Minuten im verformten Zustand gehalten wurde.

13. Reifen oder Verbundstoff nach einem der vorhergehenden Ansprüche, wobei die selbsttragende Elastomerfolie vor der Formgebung eine Dicke zwischen 10 µm und 100 µm, vorzugsweise zwischen 20 und 80 µm, noch bevorzugter zwischen 25 und 70 µm, sogar noch bevorzugter zwischen 25 und 50 µm, aufweist.

14. Reifen oder Verbundstoff nach einem der vorhergehenden Ansprüche, wobei die Lage aus Dichtmaterial vor der Formgebung eine Dicke von weniger als 7 mm, vorzugsweise weniger als 6 mm, noch bevorzugter weniger als 5 mm, und/oder mehr als etwa 2 mm, vorzugsweise mehr als 2,5 mm, noch bevorzugter zwischen 3 und 4,5 mm, aufweist

15. Reifen oder Verbundstoff nach einem der vorhergehenden Ansprüche, ferner umfassend zwei längliche Elemente aus Elastomermaterial, wobei jedes an einem jeweiligen umlaufenden oder Längsrand der Dichtungsanordnung angebracht ist.

## Revendications

1. Pneu auto-obturant pour roues de véhicule comprenant :
au moins un pli de carcasse (3), une bande de roulement (7) appliquée dans une position radialement externe par rapport audit pli de carcasse dans une région de sommet, au moins un calandrage intérieur (9) appliqué dans une position radialement interne par rapport audit pli de carcasse, un ensemble d'étanchéité (12) appliqué dans une position radialement interne par rapport au calandrage intérieur et s'étendant axialement au moins au niveau d'une partie de la partie de sommet du pneu ;
dans lequel ledit ensemble d'étanchéité (12) comprend un film élastomère autoporteur (11) comprenant au moins 50% en poids par rapport au poids du film lui-même d'un polyuréthane élastomère thermoplastique (TPU), et une couche de matériau d'étanchéité (10) associée à et supportée par ledit film élastomère autoporteur (11) ; où le film élastomère autoporteur (11) est radialement interne par rapport à la couche de matériau d'étanchéité (10) et ladite couche de matériau d'étanchéité est agencée de manière à être essentiellement en contact avec le calandrage intérieur (9).

2. Pneu de la revendication 1, dans lequel ledit ensemble d'étanchéité s'étend axialement au moins sur 60% de la partie de sommet du pneu.

3. Pneu auto-obturant pour roues de véhicule tel que revendiqué dans les revendications 1 et 2, dans lequel ledit ensemble d'étanchéité s'étend axialement au moins sur toute la partie de sommet du pneu.

4. Pneu auto-obturant pour roues de véhicule tel que revendiqué dans l'une des revendications 1 à 3, dans lequel ledit film élastomère autoporteur a une épaisseur inférieure à 50 µm et/ou supérieure à 5 µm.

5. Pneu auto-obturant pour roues de véhicule tel que revendiqué dans l'une des revendications 1 à 4, dans lequel ladite couche de matériau d'étanchéité a une épaisseur supérieure à environ 2,0 mm et/ou inférieure à 4 mm.

6. Composite multicouche en forme de bande comprenant
un ensemble d'étanchéité (12) et
un film protecteur amovible (14),
dans lequel ledit ensemble d'étanchéité comprend un film élastomère autoporteur (11) comprenant au moins 50% en poids par rapport au poids du film lui-même d'un polyuréthane élastomère thermoplastique, et une couche de matériau d'étanchéité (10) ayant des première et deuxième surfaces principales opposées, ladite couche de matériau d'étanchéité (10) étant associée à et supportée par ledit film élastomère autoporteur (11) au niveau de la première surface, et
dans lequel ledit film protecteur amovible est agencé de manière à être essentiellement en contact avec la deuxième surface dudit matériau d'étanchéité.

7. Composite tel que revendiqué dans la revendication 6, dans lequel ledit film protecteur amovible a une épaisseur inférieure à 100 µm, de préférence inférieure à 50 µm.

8. Composite tel que revendiqué dans l'une des revendications 6 et 7, dans lequel ledit film protecteur amovible comprend un matériau polymère choisi parmi des polyesters, des polyamides, des polycarbonates, des polychlorures de vinyle et des polyoléfines fluorées.

9. Pneu ou composite tel que revendiqué dans l'une quelconque des revendications précédentes, dans lequel ledit film élastomère autoporteur comprend au moins 50% en poids, de préférence au moins 70%, 80%, 90%, 95% en poids, plus préférablement, il est essentiellement constitué d'au moins un polyuréthane élastomère thermoplastique ou de mélanges de deux polyuréthannes élastomères thermoplastiques ou plus.

10. Pneu ou composite tel que revendiqué dans l'une quelconque des revendications précédentes, dans lequel ledit polyuréthanne élastomère thermoplastique est obtenu par la polymérisation d'isocyanates aromatiques, plus préférablement par la polymérisation de diisocyanates aromatiques choisis parmi le diisocyanate de naphtalène, le diisocyanate de para-phényle, le diisocyanate de toluène (TDI) et le diisocyanate de diphénylméthylène (MDI).

11. Pneu ou composite tel que revendiqué dans l'une quelconque des revendications précédentes, dans lequel ledit polyuréthane élastomère thermoplastique est **caractérisé par** une dureté (Shore A selon la norme ASTM D-2240 à 23°C) supérieure à 70, de préférence supérieure à 80, plus préférablement supérieure à 85.

12. Pneu ou composite tel que revendiqué dans l'une quelconque des revendications précédentes, dans lequel ledit film élastomère autoporteur est en outre **caractérisé par** un ou plusieurs des paramètres suivants :
- un allongement à la rupture supérieur à 150%, plus préférablement supérieur à 200%, encore plus préférablement supérieur ou égal à 250%, évalué selon la norme ASTM D882 sur une éprouvette de test de 12,57 mm de largeur déformée à la vitesse de 500 mm/min à 23°C ;
- une force pour un allongement de 10% par centimètre linéaire de largeur de préférence supérieure à 0,4 N/cm, plus préférablement supérieure à 0,6 N/cm, encore plus préférablement comprise entre 1 et 4 N/cm ;
- une force résiduelle par centimètre linéaire de largeur du film après environ 5 minutes de l'obtention de la déformation de 35% de préférence inférieure à 3,0 N/cm, plus préférablement inférieure à 2,5 N/cm, encore plus préférablement inférieure à 2,0 N/cm,
lesdites forces étant évaluées sur une éprouvette découpée de 20 mm de largeur et de 200 mm de longueur, d'épaisseur nominale comprise entre 10 et 100 µm, préchargée à 0,4 N et tirée à 500 mm/min jusqu'à 35% de déformation et ensuite maintenue à l'état déformé pendant 5 minutes.

13. Pneu ou composite tel que revendiqué dans l'une quelconque des revendications précédentes, dans lequel ledit film élastomère autoporteur, avant le galbage, a une épaisseur comprise entre 10 µm et 100 µm, de préférence entre 20 et 80 µm, plus préférablement entre 25 et 70 µm et encore plus préférablement entre 25 et 50 µm.

14. Pneu ou composite tel que revendiqué dans l'une quelconque des revendications précédentes, dans lequel ladite couche de matériau d'étanchéité, avant le galbage, a une épaisseur inférieure à 7 mm, de préférence inférieure à 6 mm, plus préférablement inférieure à 5 mm, et/ou supérieure à environ 2 mm, de préférence supérieure à 2,5 mm, plus préférablement comprise entre 3 et 4,5 mm.

15. Pneu ou composite tel que revendiqué dans l'une quelconque des revendications précédentes, comprenant en outre deux éléments allongés réalisés en un matériau élastomère, chacun étant appliqué sur un bord circonférentiel ou longitudinal respectif dudit ensemble d'étanchéité.
